# EUROPEAN PATENT APPLICATION

(11) **EP 4 306 379 A1**
(43) Date of publication of application: **17.01.2024**
(21) Application number: 22184182.8
(22) Date of filing: 11.07.2022
(51) Int. Cl.: B60W 50/00, B60W 40/09

(54) **METHOD OF CONTROLLING VEHICLE RELATED FEATURES**

(71) Applicant: Nagravision Sàrl, 1033 Cheseaux-sur-Lausanne (CH)
(72) Inventor: AGRAWAL, Dilip Kumar, 1033 Cheseaux-sur-Lausanne (CH)
(74) Representative: Novagraaf International SA

(57) **Abstract**

The method of controlling vehicle related features for a vehicle connected to a backend system through a communication network, comprises the following steps performed by the backend system:
i) transmitting to the vehicle a set of one or more target parameters of vehicle related features, together with a driver identifier;
ii) receiving, from the vehicle, vehicle driving information related to the vehicle related features when said driver drives the vehicle;
iii) analyzing the received vehicle driving information, and updating the set of one or more target parameters of vehicle related features, based on a result of the analysis, and
iv) transmitting the updated set of one or more target parameters of vehicle related features.

## Description

### TECHNICAL FIELD

The present disclosure relates a method and system of controlling vehicle related features. Such a system can be used for example to control vehicle related features when a first user, such as a parent, hands over a vehicle to a second user, for example a child who is a young driver.

### BACKGROUND

Statistics related to road accidents are dramatic for young drivers. A young driver is highly more likely to commit an accident. Therefore, a parent may worry when handing over vehicle key to a child who is a young driver or a new learner.

Therefore, there is a need for improving the situation. In particular, there is a need for reducing the risk of accident when a young driver drives a vehicle.

### SUMMARY

The present disclosure concerns a method of controlling vehicle related features for a vehicle connected to a backend system through a communication network, comprising the following steps performed by the backend system:
i) transmitting to the vehicle a set of one or more target parameters of vehicle related features, together with a driver identifier;
ii) receiving, from the vehicle, vehicle driving information related to the vehicle related features when said driver drives the vehicle;
iii) analyzing the received vehicle driving information, and updating the set of one or more target parameters of vehicle related features, based on a result of the analysis, and
iv) transmitting the updated set of one or more target parameters of vehicle related features.

The vehicle driving information related to the vehicle related features when the driver drives the vehicle is uploaded from the vehicle to the backend system, and may be indicative on how the driver respects the target parameters of the vehicle related features. It is a driving feedback information with regards to the transmitted target parameters of vehicle related features. The backend system analyses the received driving information and then updates the set of one or more target parameters of vehicle related features. The backend system may modify at least one of the target parameters. The modification of the target parameter of a given vehicle related feature may depend on how this target parameter has been respected by the driver when driving the vehicle. For example, if the driver totally respected the target parameter of a given vehicle related feature, the updated parameter of said vehicle related feature may be less restrictive. On the contrary, if the driver did not respect or tried not to respect the target parameter of a given vehicle related feature, the updated parameter of said vehicle related feature may be more restrictive. For example, if the driver drove the vehicle without exceeding a target speed limit, said target speed limit may be increased. On the contrary, if the driver often tried to drive the vehicle over the target speed limit, said target speed limit may be maintained or decreased.

In this way, the target parameters of vehicle related features are adapted to the driver's behavior so as to secure the vehicle and reduce the risk of accident.

In an embodiment, the vehicle driving information may include a plurality of records of data received from in-vehicle devices at successive time points, and wherein the step of analyzing the received vehicle driving information includes determining an achievement level for each target parameter based on said plurality of records. The backend server may analyze how the driver drove the vehicle and update the set of target parameters of vehicle related features, based on successive records of data received from in-vehicle devices. The data from the records may be in connection with the vehicle related features for which the one or more target parameters have been programmed in the vehicle.

Advantageously, the step of updating the set of one or more target parameters of vehicle related features may be performed from the determined achievement levels for the one or more target parameters and based on predefined rules defining update actions depending on achievement levels of the target parameters. The backend server may rely on predefined rules assigning given update actions to target achievement levels or ranges of target achievement level, to update the set of one or more target parameters.

In an embodiment, the method may further comprise a step of receiving, by the backend system, from a first user device having an authorization to access the vehicle, a request for transmitting to the vehicle said set of one or more target parameters of vehicle related features, together with a second user identifier as driver identifier. The first user may be the owner of the vehicle, for example a parent, and the second user may be a parent's child.

Advantageously, the method may further comprise a step of receiving, by the backend system, from the first user device, a request for deriving an authorization to access the vehicle for said second user. The backend system may be configured to manage who has access to the vehicle, when and for how long.

In an embodiment, the updated set of one or more target parameters of vehicle related features may be transmitted by the backend system to the first user device, and the method further comprises a step of receiving, by the backend system, from the first user device a request for transmitting to the vehicle the updated set of one or more target parameters of vehicle related features, together with the second user identifier. The updated set of one or more parameters may be first transmitted to the first user device, so that the first user can validate it, and then be transmitted to the vehicle through the backend system, upon request from the first user device. Alternatively, the updated set of one or more target parameters of vehicle related features may be transmitted directly to the vehicle.

In an embodiment, the set of one or more target parameters of vehicle related features may be received by the backend system together with an associated duration, and the step of analyzing the received vehicle driving information may be performed on the vehicle driving information over said whole duration. In this case, the set of one or more target parameters is updated after the driver drove the vehicle during the duration associated with this set, based on the vehicle driving information over this whole duration. Alternatively, the update of the target parameter(s) may be performed in real time or almost in real time.

In an embodiment, the set of one or more target parameters of vehicle related features may include at least one of a vehicle speed limit, a limited geographical driving area, a restriction on audio and/or video in the vehicle, and a limited number of vehicle passenger(s).

The present disclosure also concerns a method of controlling a vehicle connected to a backend system through a communication network, comprising the following steps performed by the vehicle:
- receiving a set of one or more target parameters of vehicle related features, together with a driver identifier, from the backend system;
- controlling the vehicle related features based on the received set of one or more target parameters, when said driver drives the vehicle;
- determining vehicle driving information related to the vehicle related features when said driver drives the vehicle and transmitting said vehicle driving information to the backend system;
- then, receiving an updated set of one or more target parameters of vehicle related features together with said driver identifier, depending on the transmitted vehicle driving information, from the backend system;
- controlling the vehicle related features based on the received updated set of one or more target parameters, when said driver drives the vehicle.

In an embodiment, the step of determining vehicle driving information may include receiving data related to said vehicle related features from at least one in-vehicle device, and generating the vehicle driving information based on the received data.

The in-vehicle devices may include at least one of a GPS tracker, a seat pressure sensor, an infotainment system, a speedometer.

In an embodiment, the step of generating the vehicle driving information may include producing a plurality of records of data received from in-vehicle devices at successive time points.

In an embodiment, the step of controlling the vehicle related features may include monitoring at least one of said vehicle related feature and, in the event that said driver contravenes or tries to contravene the target parameter of said vehicle related feature, controlling the vehicle to execute at least one action among slowing down the vehicle speed, triggering an alarm in the vehicle, generating report data related to the event and adding the report data within the vehicle driving information.

The present disclosure also concerns:
- a backend system configured to carry out the steps of the first method previously defined;
- a vehicle configured to carry out the steps of the second method previously defined;
- a distributed system comprising a backend system and a vehicle, as above defined.

The distributed system may further comprise a first user device having access authorization to the vehicle and configured to transmit to the backend system a request for transmitting to the vehicle said set of one or more target parameters of vehicle related features, together with a second user identifier as driver identifier.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a distributed system of controlling vehicle related features for a vehicle connected to a computer system through a communication network, according to an embodiment.
Figure 2 shows an overall components communication diagram, according to an embodiment.
Figures 3-6 show different communication diagrams between components within the vehicle, related to various vehicle related features, according to various embodiments.
Figures 7A to 7D illustrates records of data, result of analysis of the records of data, update of target parameters in connection with vehicle related features, according to an embodiment.

### DETAILED DESCRIPTION

The present disclosure concerns a method and system of controlling vehicle related features for a vehicle 200 wirelessly connected to a backend system 100 through a communication network 300.

The vehicle related features can for example include a vehicle speed, a geographical driving area for the vehicle, audio and/or video in an in-vehicle infotainment system 230, a number of vehicle passenger(s), etc. This list of vehicle related features is only illustrative and non-limitative.

In an embodiment, the backend system 100 has a role of passive keyless access management and a role of controlling or monitoring or managing vehicle related features, for a plurality of vehicles. The backend system 100 may include a server 110, implementing passive keyless access management and vehicle related features control with software and hardware, and a database 120. For example, an existing passive keyless access management backend system may be extended to include a function of vehicle related features control, according to the present disclosure.

In another embodiment, the vehicle related features control system and the passive keyless access management system may be two separated computer backend systems cooperating together.

In another embodiment, the backend system 100 has only a role of controlling vehicle related features and does not cooperate with a passive keyless access management system.

In an embodiment, the vehicle 200 may be owned by a first user A, for example a parent, and said first user A may authorize a second user B to access and drive the vehicle 200, for example a child that is a young driver, through a derived authorization (in other words: a delegation of access rights).

The first user A may have a first user mobile device DVC_A, and the second user B may have a second user mobile device DVC_B.

In an embodiment, the first user mobile device DVC_A may include a client module 10 for vehicle passive keyless access and vehicle related features control, implemented with software and hardware, and be registered with the backend system 100. The first user A may have a user account (or user profile) including information related to the first user A and his vehicle 200 that is stored in the database 120 of the backend system 100. The first user account may include a user identifier ID_A.

The first user A may have authorization to access to the vehicle 200 by approaching the vehicle 200 with the first user mobile device DVC_A, and the client module 10 of the first user device DVC_A may be configured to securely manage who has access to the vehicle 200, when and for how long, through the backend system 100.

In another embodiment, the first user mobile device DVC_A may include two distinct client modules for vehicle passive keyless access and for vehicle related features control, respectively.

In an embodiment, the second user mobile device DVC_B may include a passive keyless access client module 20, implemented with software and hardware, and be registered with the backend system 100. The second user B may have a user account (or account) including information related to the second user B that is stored in the database 120 of the backend system 100. The stored second user account may include a user identifier ID_B.

The second user B may be authorized to access the vehicle 200 by approaching the vehicle 200 with the second user mobile device DVC_B, at least for a certain period of time, based on a derived authorization, in other words based on a delegation of access rights to the vehicle 200, generated by the client module 10 of the first user mobile device DVC_A. The derived authorization may be transmitted to the second user device DVC_B, for example through the backend system 100. The derived authorization may include an authorization digital key K_{B} uniquely attributed to the second user B by the first user A.

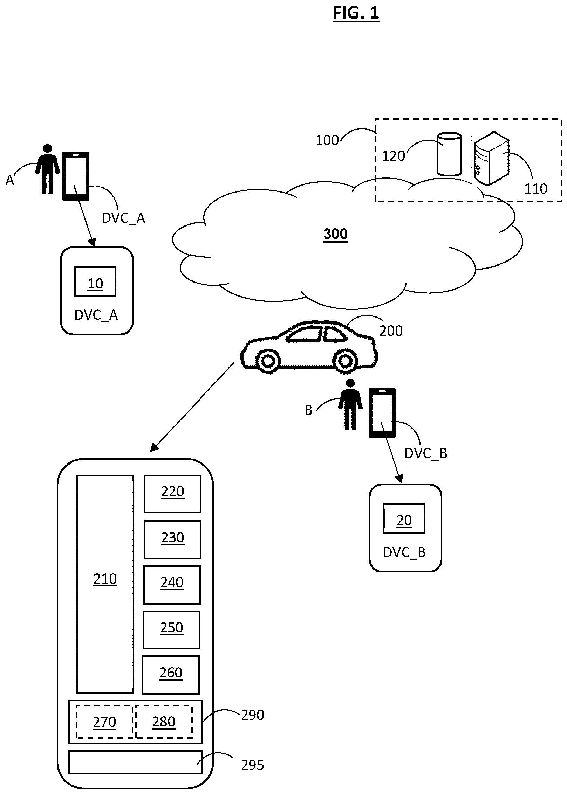

Figure 1 shows a schematic representation of a distributed system including the backend system 100, the vehicle 200, the communication network 300, the first user device DVC_A, and the second user device DVC_B. The first user device DVC_A and second user device DVC_B may be both connected to the backend system 100 through the communication network 300.

The vehicle 200 may include a control unit or processor 210, multiple sensors 220, such as pressure sensors for detecting passengers on vehicle seats, an infotainment system 230, a speedometer 240, a speed control unit 250, and a GPS tracker 260. In the present disclosure, the vehicle 200 further includes a client or frontend module 290, configured to cooperate with the backend system 100. In an embodiment, the client module 290 has a part 270 for controlling passive keyless access to the vehicle 200, and a part 280 for controlling vehicle related features based on who drives the vehicle 200. The client module 290 has also a memory 291 for storing parameters of vehicle related features in association with a user identifier. The client module 290 may be implemented with hardware and software. For example, the client module 290 includes an application, or software, running on the control unit 210.

In an embodiment, the two parts 270, 280 may be separated into two distinct client modules for controlling passive keyless access to the vehicle 200 and for controlling vehicle related features based on who drives the vehicle 200, respectively.

In another embodiment, the vehicle 200 has only a client module for controlling vehicle related features based on who drives the vehicle 200.

The vehicle 200 may also have a user interface 295.

According to the present disclosure, the backend system 100 can put control on the vehicle 200 through a set of one or more target parameters of vehicle related features so that, when the second user B drives the vehicle 200, said vehicle related features are controlled and/or monitored, based on the set of one or more target parameters, and vehicle driving information related to the vehicle related features is uploaded to the backend system 100. Then, based on an analysis of the received vehicle driving information, the backend system 100 may update the set of one or more target parameters of vehicle related features and transmit the updated set. The uploaded vehicle driving information is indicative of the behavior of the second user B as driver for the vehicle related features. If the second user B drives the vehicle by trying to contravene or by contravening the one or more target parameters of vehicle relates features, the updated set of target parameters may include more restrictive target parameters. If the second user B drives the vehicle by totally satisfying the target parameter(s) of vehicle related features, without trying to contravene them, the updated set of target parameters may include less restrictive target parameter(s).

The method of controlling (or monitoring or managing) vehicle related features for the vehicle 200 will now be described, according to an embodiment.

In an embodiment, a plurality of sets of one or more target parameters of vehicle related features are generated in a configuration step S0 and stored in memory, for example in the database 120 of the backend system 100. Alternatively, or additionally, the plurality of sets of one or more target parameters of vehicle related features may be stored in memory in the first user device DVC_A.

The target parameter of a vehicle related feature may define a target value or a range of values that said vehicle related feature must satisfy.

The table 1 below gives an illustrative example of different sets of target parameters for several vehicle related features. Each set of target parameters may be associated with a determined duration.

**Table 1**

| | **maxima I speed** | **driving geographic al area** | **audio** | **video** | **maximal number of passengers** | **Duration (in weeks)** |
|---|---|---|---|---|---|---|
| **SET 1** | 55 km/h | within 30 km radius | 0 (no) | 0 (no) | 1 | 3 |
| **SET 2** | 60 km/h | within 30 km radius | 1 (yes) | 0 (no) | 2 | 2 |
| | | | | | | |
| **SET n** | 100 km/h | within 30 km radius | 1 (yes) | 1 (yes) | 4 | 4 |

Each set of target parameters of vehicle related features can be considered as a vehicle use profile.

In the database 120, the first user A account may include a list of sets of target parameters, that the first user A is entitled to use.

Let's consider that the second user device DVC_B has a derived authorization to access the vehicle 200 and drive it, provided by the first user device DVC_A through the backend system 100. Furthermore, the above listed sets SET 1 to SET N may be for example associated with the first user identifier ID_A and stored in the first user account in the database 120.

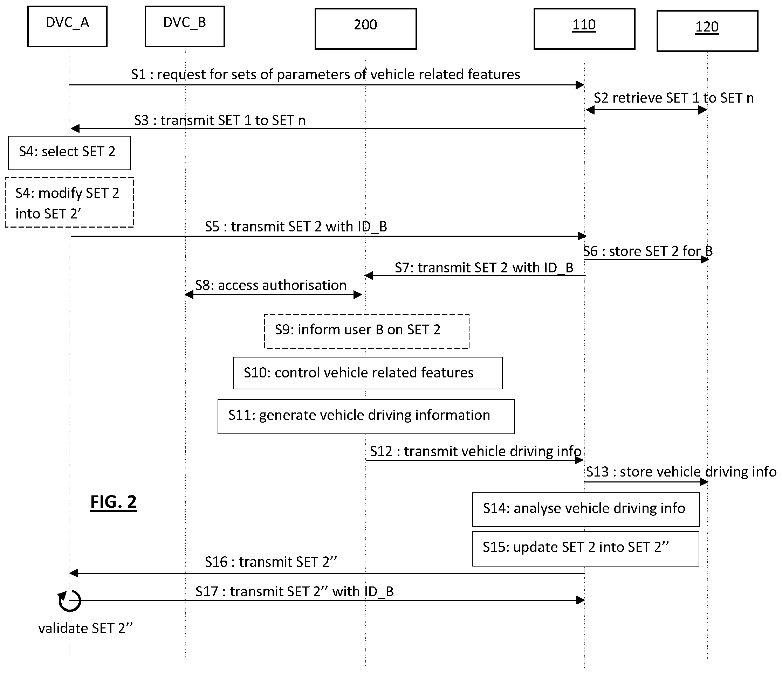

The process of controlling or monitoring vehicle related features for the vehicle 200 when the second user B accesses the vehicle 200 and drives it will now be described with reference to figure 2, according to an embodiment.

In a first step S1, the first user device DVC_A may transmit to the backend server 110 a request for receiving the pre-stored sets of parameters of vehicle related features, in the example the sets of parameters SET 1 to SET n, associated with the first user identifier ID_A in the database 120.

The backend server 110 may receive the request and, in response to the received request, retrieve the requested pre-stored sets of parameters SET 1 to SET n from the database 120, in a step S2, and transmit them to the first user device DVC_A, in a step S3.

Then, in a step S4, the first user device DVC_A may receive the requested sets of parameters SET 1 to SET n, select one of them under control of the first user A, and program the selected set of parameters for the second user B, via a user interface of the client module 10. As an illustrative and non-limitative example, let's consider that the first user device DVC_A selects the set "SET 2" of parameters for the second user B.

Optionally, in a step S4', the first user device DVC_A may modify at least part of the one or more parameters of the selected set, via the user interface, so as to create a new set of target parameters of vehicle related features, and program the new set of parameters for the second user B.

In another embodiment, the first user device DVC_A may create a set of target parameters of vehicle related features, without using a pre-stored set of parameters, and program it for the second user B, via the user interface of the client module 10.

Then, in a step S5, the first user device DVC_A may transmit to the backend server 110 a request to transmit the programmed (selected, modified or created) set of target parameters of vehicle related features (SET 2, in the illustrative example) to the vehicle 200, in association with the second user B identifier ID_B. This request may include the programmed set of target parameters of vehicle related features and the second user identifier ID_B.

In an optional step, in case a new or modified set of parameters has been created and transmitted to the backend server 110 by the first user device DVC_A, the backend server 110 may add this new set into the database 120. The new set of parameters may be associated with the first user identifier ID_A in the database 120.

In a step S6, after receiving the programmed set of target parameters of vehicle related features, in association with the second user B identifier ID_B, the received set of parameters is stored in the database 120 in the account of the second user B, as target parameters of vehicle related features that must be used when the second user B drives the vehicle 200. The programmed set of parameters may be stored in the second user B account together with the derived authorization to access the vehicle 200, in the database 120. The derived authorization may include the authorization key K_{B} of the second user B.

In a step S7, the backend server 110 may transmit the programmed set of parameters in association with the second user identifier ID_B to the vehicle 200, through the communication network 300. Optionally, the programmed set of parameters is transmitted in association with a duration.

The step S7 may be performed upon reception of the programmed set of parameters by the backend system 100, or when the second user B starts driving the vehicle 200.

Later, in a step S8, the second user B approaches the vehicle 200 with his user device DVC_B. A process of access authorization is executed between the vehicle 200 and the client module 20 of the second user device DVC_B. The access authorization process may include the use of the authorization key K_{B}, in a well-known manner. Upon a successful access authorization based on the derived authorization of the second user device DVC_B, the second user B can access the vehicle 200 and drive it. During the process of access authorization, the second user B is identified by the vehicle 200.

Alternatively, the second user B may access the vehicle 200 with a physical key and identifies with the vehicle 200 via the user interface 295 of the vehicle 200.

After identification of the second user B by the vehicle 200, the second user identifier ID_B is provided to the client module 290 to indicate who drives the vehicle 200.

Then, the client module 290 retrieves the target parameters of vehicle related features pre-stored in memory in association with the second user identifier ID_B and use them to control and/or monitor said vehicle related features when the second user B drives the vehicle 200. In the illustrative example, the SET 2 of target parameters of vehicle related features include:
- a maximal vehicle speed of 60 km/h;
- a maximal driving geographic area within 30 km radius from a given location (for example, the starting point when the user starts the vehicle or home location);
- audio only;
- a maximal number of two passengers in the vehicle 200 (including the driver). Furthermore, in the given example, the above target parameters may be associated with a given duration (two weeks for SET 2) during which they should be used.

Optionally, in a step S9, when the second user B starts the vehicle 200, the vehicle 200 may inform the user B, via a user interface, that the programmed target parameters of the vehicle related features must be used when driving the vehicle 200 (in the illustrative example: maximal speed of 60 km/h, driving area within 30 km radius, audio only and maximum 2 passengers). For example, the programmed target parameters may be displayed on a vehicle screen or indicated by a voice played by a speaker.

When the second user B drives the vehicle 200, the client module 290 may control and/or monitor the vehicle related features based on the received set of one or more target parameters, in a step S10. The step S10 of controlling or monitoring the vehicle related features may include monitoring the vehicle related features.

In the step S10, to monitor the vehicle related features, the client module 290 of the vehicle 200 may collect, receive, data from in-vehicle devices of the vehicle 200. The type of collected or received data depends on the vehicle related features for which target parameters are programmed. Indeed, the collected data are adapted to allow monitoring how the second user B respects the target parameters that have been programmed for vehicle related features. In the illustrative example, the collected data may include:
- speed data from the speedometer 240,
- audio/video related data from the infotainment system 230,
- location data from the GPS tracker 260,
- detected data from one or more seat pressure sensor(s).

The step S10 may include, in the event that the user B (driver) contravenes or tries to contravene the target parameter of a given vehicle related feature, controlling the vehicle to execute at least one action among slowing down the vehicle speed, triggering an alarm in the vehicle, generating report data related to the event.

In a step S11, the client module 290 may produce vehicle driving information in connection with said vehicle related features for which target parameters have been programmed, based on the collected or received data. The vehicle driving information includes information for monitoring the vehicle related features for which target parameters have been programmed when the driver B drives the vehicle 200.

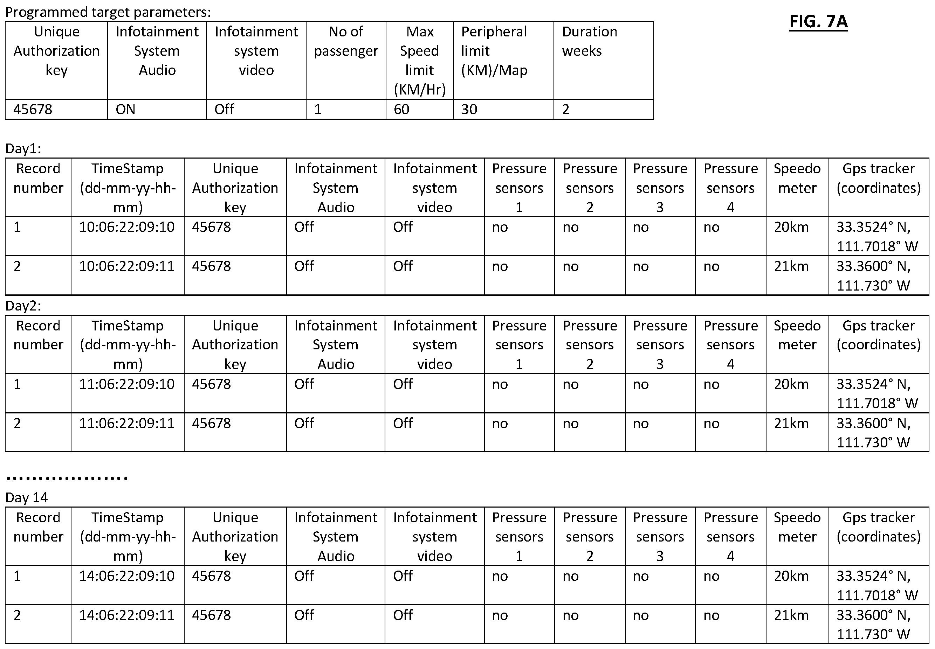

In an embodiment, the vehicle driving information in connection with the vehicle related features for which target parameters have been programmed may include a plurality of records of the received data related to the vehicle related features for which target parameters have been programmed at successive time points. The client module 290 of the vehicle 200 may generate these records from the data received in the step S10 and store them in memory. Each record may correspond to one time point and include data received from the in-vehicle devices in the step S10 in connection with said vehicle related features for which target parameters have been programmed. Figure 7A is an illustrative example of some records made on different days over a given duration of two weeks. For each day, only two records are represented in figure 7A, but many other successive records may be created and stored by the vehicle 200. The records may be produced at successive time points, at a given time frequency (e.g., every minute in figure 7A).

In an embodiment, the client module 290 receives data from one or more in-vehicle devices and, in the event that the user B (driver) contravenes or tries to contravene the target parameter of a given vehicle related feature, may optionally generate report data related to the event and adds the report data within the vehicle driving information.

Then, in a step S12, the vehicle 200 may transmit the vehicle driving information together with the second user identifier ID_B to the backend system 100. The second user identifier ID_B may include the authorization key K_{B} of the driver B, as shown in figure 7A. The vehicle driving information may be transmitted to the backend system 100 in real time, or almost in real time, as the vehicle 200 receives the data from the in-vehicle devices. Alternatively, the vehicle driving information may be stored in a memory, for example a buffer memory, in the vehicle 200 and transmitted to the backend system 100 later, for example periodically, or after each travel of the second user B.

In a step S13, the backend server 110 may receive the vehicle driving information from the vehicle 200 and store it into the database 120. In an embodiment, the backend server 110 may receive and store the records of data from the vehicle 200. The records may be transmitted from the vehicle 200 to the backend server 110 either in real time, or periodically, or after each time the driver B drove the vehicle, or after the duration of the current set of target parameters, or according to any other transmission schedule.

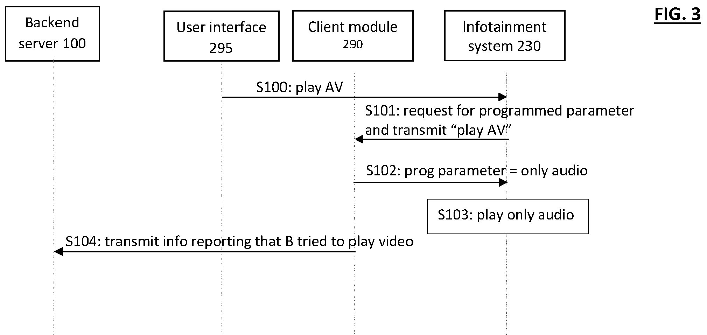

Figures 3-6 give illustrative examples of different types of data from different in-vehicle devices, that may be collected by the client module 290, and the vehicle driving information uploaded to the backend server 110, when the second driver B drives the vehicle 200.

Figure 3 is a communication diagram between in-vehicle devices including the infotainment system 230, according to an illustrative example. In a first step S100, the second user B enters a command for the infotainment system 230 to play audio and video, via the user interface 295 of the vehicle 200. The infotainment system 230 transmits to the client module 290 a request for obtaining the currently programmed parameter(s) of features related the infotainment system 230 and notifies the command entered by the user B to the client module 290 ("play audio and video" in the example), in a step S101. In response, the infotainment system 230 receives the programmed parameter ("only audio" in the example), in a step S102. Then, the infotainment system 230 uses or applies the programmed parameter (in the example, it only plays audio), in a step S103. In a step S104, the client module 290 may include in the vehicle driving information the information that the user B tried to play video and transmit it to the backend server 110. The information that the user B tried to play video may be transmitted to the backend server 110 within the vehicle driving information either directly or in the records.

In case the second user B enters commands to only play audio, the client module 290 may transmit to the backend server 110 the information that the second user B only entered commands to play audio. This information may be transmitted to the backend server 110 within the vehicle driving information either directly or in the records.

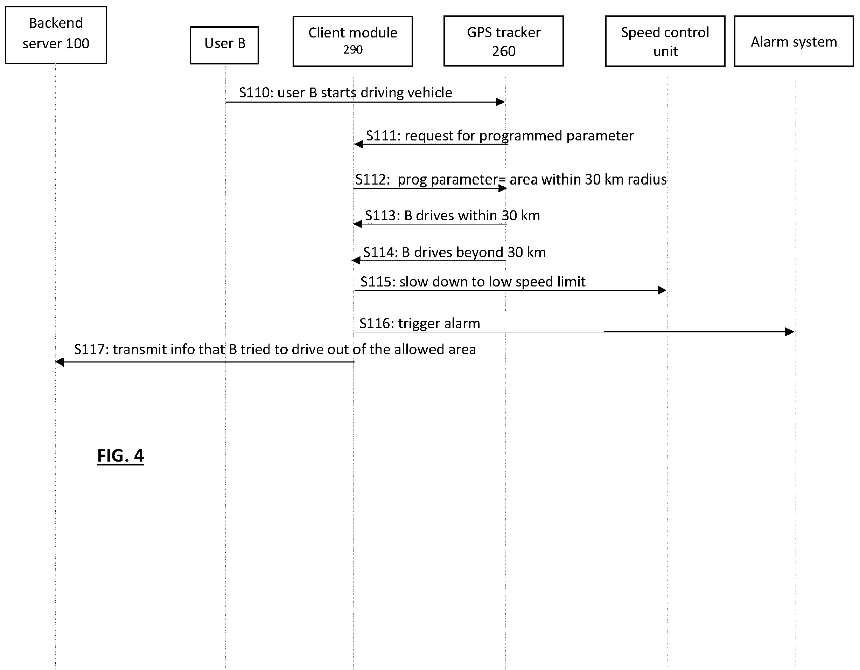

Figure 4 is a communication diagram between in-vehicle devices including the GPS tracker 260. In a step S110, the second user B starts driving the vehicle 200. Then, in step S111, the GPS tracker 260 transmits to the client module 290 a request for obtaining the currently programmed parameter(s) of features related to GPS tracking. In response, in a step S112, the client module 290 transmits to the GPS tracker 260 the programmed parameter, in the example the driving area within 30 km radius from the starting location. Then, periodically, the GPS tracker 260 may transmit to the client module 290 an information indicating whether or not the vehicle 200 is driven within the programmed driving area. In the example of figure 4, the GPS tracker 260 sends to the client module 290 the information that the vehicle 200 is driven within the programmed driving area, in a step S113, and then, later, the information that vehicle 200 is driven beyond the programmed driving area, in a step S114. In a step S115, upon detection that the second user B drives the vehicle 200 out of the programmed driving area, the client module 290 may transmit to the speed control unit 250 an instruction of slowing down the speed of the vehicle 200, to a slow speed limit for example 10 km/h. Optionally, the client module 290 may also raise an alarm, for example by triggering a sound and/or vocal and/or visual alarm in the vehicle 200, to warn the second user B that he/she has driven the vehicle 200 beyond the allowed driving area, in a step S116. In a step S117, the client module 290 may transmit to the backend server 110 the vehicle driving information reporting that the second user B tried to drive beyond the allowed driving area. This information may be transmitted to the backend server 110 within the vehicle driving information either directly or in the records.

Optionally, after the step S115, the client module 290 may obtain the speed of the vehicle 200 from the speedometer, to check if the vehicle 200 has slowed down.

In case the second user B drives the vehicle 200 within the programmed driving area, the client module 290 may transmit to the backend server 110 the information that the second user B drives within the allowed driving area. This information may be transmitted to the backend server 110 within the vehicle driving information either directly or in the records

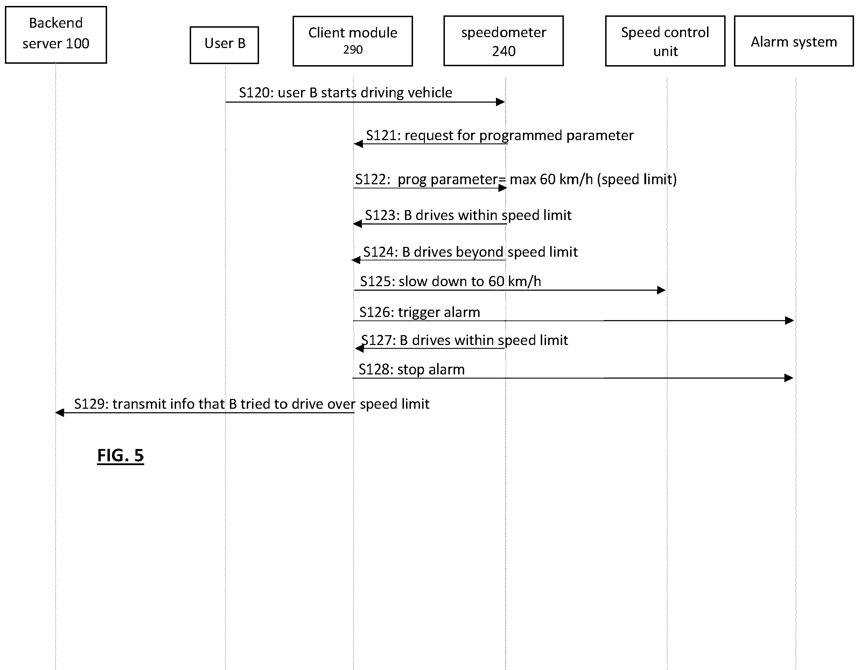

Figure 5 is a communication diagram between in-vehicle devices including the speedometer 240 and the speed control unit 250. In a step S120, the second user B starts driving the vehicle 200. Then, in step S121, the speedometer 240 transmits to the client module 290 a request for obtaining the currently programmed parameter(s) of features related to vehicle speed. In response, in a step S122, the client module 290 transmits to the speedometer 240 the programmed parameter, in the example the speed limit of 60 km/h. Then, the speedometer 240 may periodically transmit to the client module 290 the information whether or not the speed of the vehicle 200 is within the programmed speed limit (less than or equal to). In the example of figure 5, the speedometer 240 first sends to the client module 290 the information that the vehicle speed is within the speed limit, in a step S123, and then, later, the information that vehicle speed is over the programmed speed limit, in a step S124. In a step S125, upon detection that the second user B drives the vehicle 200 with a speed over the speed limit, the client module 290 may transmit to the speed control unit 250 an instruction of slowing down the speed of the vehicle 200 to the programmed speed limit (60 km/h in the example). Optionally, in a step S126, the client module 290 may also raise an alarm, for example by triggering a sound and/or vocal and/or visual alarm in the vehicle 200, to warn the second user B that he/she drove over the allowed speed limit. Then, in a step S127, the speed control unit 250 or the speedometer 240 may transmit the information that the vehicle speed is within the speed limit to the client module 290. This information may be transmitted directly to the backend server 110 and/or within the records transmitted to the backend server 110. In a step S128, upon receiving this information the client module 290 may stop the alarm. In a step S129, the client module 290 may transmit to the backend server 110 the information that the second user B tried to drive over the allowed speed limit. This information may be transmitted to the backend server 110 within the vehicle driving information either directly or in the records.

In case the second user B drives the vehicle 200 within the programmed speed limit, the client module 290 may transmit to the backend server 110 the information that the second user B drives within the allowed speed limit. This information may be transmitted to the backend server 110 within the vehicle driving information either directly or in the records.

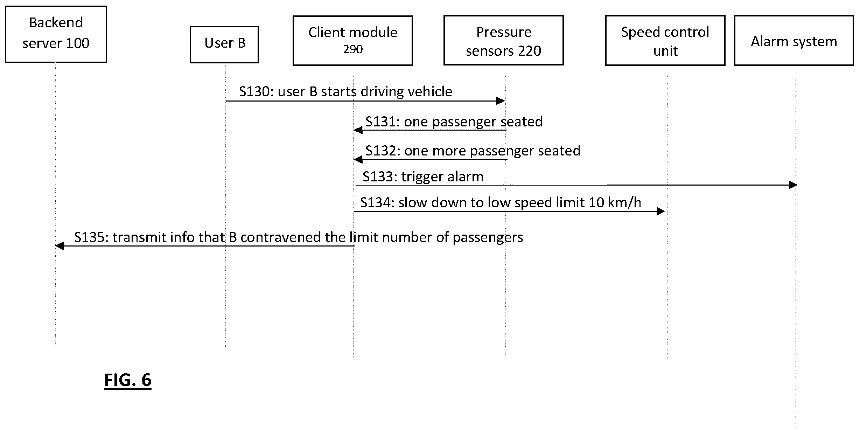

Figure 6 is a communication diagram between in-vehicle devices including the pressure sensors 220, used to detect the presence of one or more passengers seated in the vehicle 200. In a step S130, the second user B starts driving the vehicle 200. Then, in steps S131 and S132, two different pressure sensors 220 transmit to the client module 290 the information that two passengers are seated in the vehicle 200, in addition to the driver. As the number of allowed passengers, including the driver, is two in the example, the client module 290 may raise an alarm in a step S133, for example by triggering a sound and/or vocal and/or visual alarm in the vehicle 200, to warn the second user B that the total number of passengers in the vehicle is over the allowed limit. Furthermore, in a step S134, the client module 290 may transmit to the speed control unit 250 an instruction of slowing down the speed of the vehicle 200, to a slow speed limit for example 10 km/h. In a step S135, the client module 290 may transmit to the backend server 110 the information that the second user B has contravened the limit of number of allowed passengers in the vehicle 200. This information may be transmitted to the backend server 110 within the vehicle driving information either directly or in the records.

In case the number of passengers in the vehicle 200 remains within the programmed maximal number of passengers, the client module 290 may optionally transmit to the backend server 110 the information that the second user B has respected the programmed number of passengers. This information may be transmitted to the backend server 110 within the vehicle driving information either directly or in the records.

As shown in figure 2, in a step S14, the backend server 110 may then analyze the received and stored vehicle driving information to determine how the set of one or more target parameters (SET 2 in the illustrative example) of vehicle related features is used when the second user B drives the vehicle 200. The analysis may be performed on all the vehicle driving information received advantageously during the entire duration associated with the programmed set of parameters. For example, a score may be attributed to each vehicle related feature indicating an achievement level of the target parameter programmed for said vehicle related feature, in other words how the second user B respected the target parameter of said vehicle related feature over the programmed duration. A score of 100% may indicate that the parameter has been totally respected (satisfied) by the second user B, while a score of 0% may indicate that the parameter has never been satisfied (respected) by the second user B (or that the second user B systematically tried not to satisfy it).

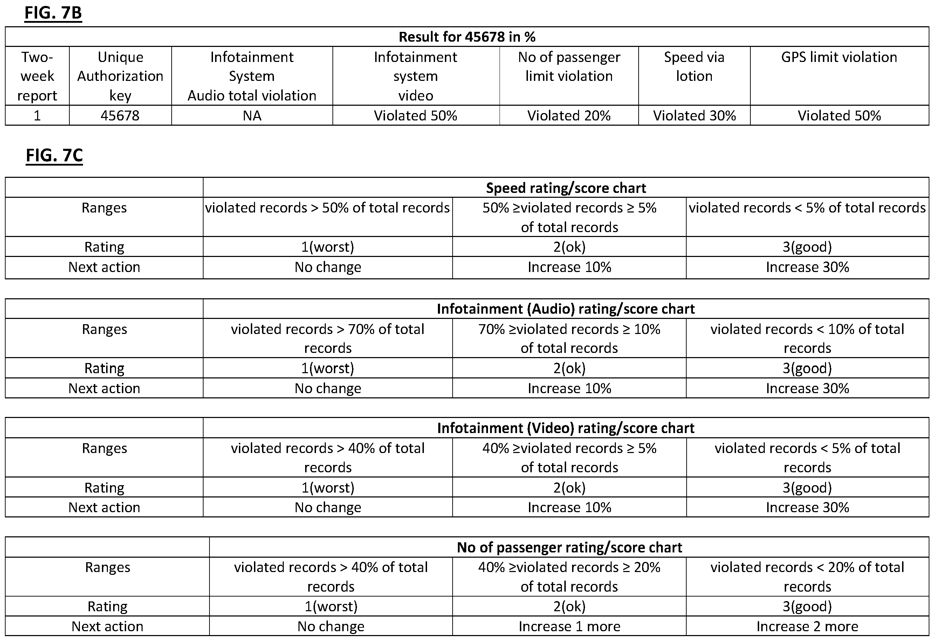

In case the received and stored vehicle driving information comprises records of data received from in-vehicle devices at successive time points in connection with the vehicle related features for which target parameters have been programmed, when the driver B drove the vehicle 200, the backend server 110 may analyze the data records to determine the levels of achievement of the target parameters that have been programmed for vehicle related features. For example, the backend server 100 may perform a statistical analysis of the data records to determine scores representing levels of achievement of the target parameters, for example as percentages. Figure 7B shows some results of such a statistical analysis performed on records of figure 7A.

In an embodiment, the levels of achievement of the target parameters in connection with the vehicle related features are determined based on the records, preferably all the records, stored during the whole duration assigned to the current target parameters.

Then, in a step S15, based on a result of the analysis performed in the step S14, the backend server 110 may update the set of one or more target parameters of vehicle related features. In the illustrative example, SET 2 is modified into SET 2". For example, depending on the analysis result for each vehicle related feature, the target parameter of said feature may be modified to be more or less restrictive. The update of the set of one or more target parameters of vehicle related features may be performed based on predefined rules. These predefined rules may, for each vehicle related feature, define a given update action to update the corresponding target parameter depending on a level of achievement determined in the step S14. Figure 7C show an illustrative example of predefined rules. Optionally, the rules can define different ratings, for example 1, 2 and 3 in figure 7C, respectively attributed to different ranges of levels of achievement, for each vehicle related feature.

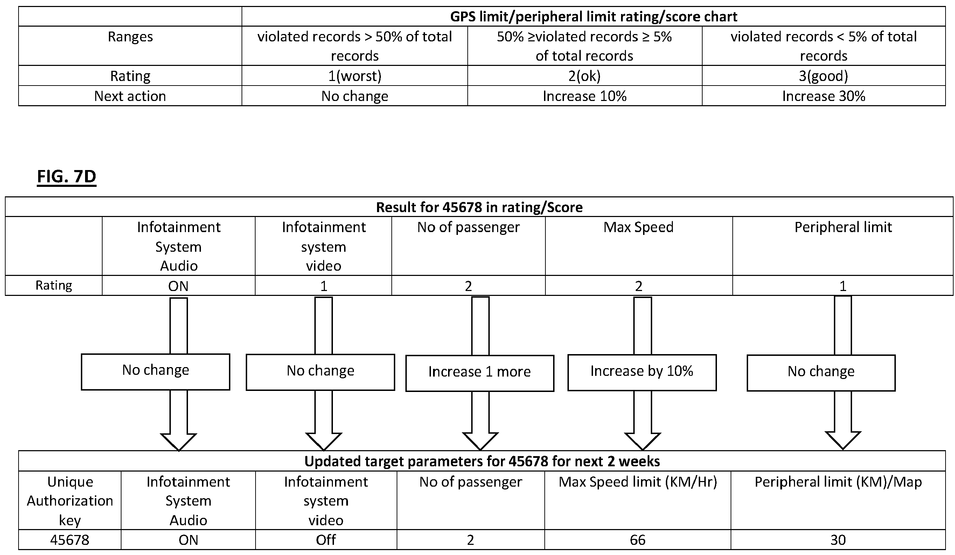

Figure 7D shows an illustrative example of update actions performed from the results of the analysis of the records partially illustrated in figure 7A and based on the predefined rules shown in figure 7C.

In a next step S16, the backend server 110 transmits the updated set of one or more target parameters of vehicle related features (SET 2" in the example), together with the driver identifier (in the example ID_B), for example to the first user device DVC_A.

The first user A may optionally validate or approve the received updated set of one or more target parameters of vehicle related features, with the user device DVC_A, and transmit to the backend server 110 a request to transmit the updated set of one or more target parameters of vehicle related features to the vehicle 200, in association with the second user identifier ID_B, in a step S17, in the same manner as in step S5.

Then, the steps S6 to S17 may be executed again but using the updated set of one or more target parameters of vehicle related features (SET 2" in the example). The client module 290 may thus control the vehicle related features based on the updated set of one or more target parameters, when the user B next drives the vehicle 200.

Alternatively, the updated set of parameters may be directly transmitted to the vehicle 200, without validation by the first user device DVC_A.

The present disclosure also concerns:
- a computer program comprising instructions which, when which, when the program is executed by a computer, cause the computer to carry out the steps of the method previously described that are executed by the backend system 100;
- a computer program comprising instructions which, when which, when the program is executed by a computer, cause the computer to carry out the steps of the method executed by the vehicle 200.

## Claims

1. A method of controlling vehicle related features for a vehicle (200) connected to a backend system (100) through a communication network (300), comprising the following steps performed by the backend system (100):
i) transmitting (S7) to the vehicle (200) a set of one or more target parameters of vehicle related features, together with a driver identifier (ID_B);
ii) receiving (S12), from the vehicle (200), vehicle driving information related to the vehicle related features when said driver (B) drives the vehicle (200);
iii) analyzing (S14) the received vehicle driving information, and updating (S15) the set of one or more target parameters of vehicle related features, based on a result of the analysis, and
iv) transmitting (S16) the updated set of one or more target parameters of vehicle related features.

2. The method according to claim 1, wherein the vehicle driving information includes a plurality of records of data received from in-vehicle devices at successive time points, and wherein the step of analyzing the received vehicle driving information includes determining an achievement level for each target parameter based on said plurality of records.

3. The method according to claim 2, wherein the step of updating the set of one or more target parameters of vehicle related features is performed from the determined achievement levels for the one or more target parameters and based on predefined rules defining update actions depending on achievement levels of the target parameters.

4. The method according to any of claim 1 to 3, further comprising a step (S5) of receiving, by the backend system (100), from a first user device (DVC_A) having an authorization to access the vehicle, a request for transmitting to the vehicle (200) said set of one or more target parameters of vehicle related features, together with a second user identifier (ID_B) as driver identifier.

5. The method according to claim 4, further comprising a step of receiving, by the backend system (100), from the first user device (DVC_A), a request for deriving an authorization to access the vehicle (200) for said second user (B).

6. The method according to claim 4 or 5, wherein the updated set of one or more target parameters of vehicle related features is transmitted (S7) by the backend system (100) to the first user device (DVC_A), and the method further comprises a step (S17) of receiving, by the backend system (100), from the first user device (DVC_A) a request for transmitting to the vehicle (200) the updated set of one or more target parameters of vehicle related features, together with the second user identifier (ID_B).

7. The method according to any of claims 1 to 6, wherein the set of one or more target parameters of vehicle related features includes at least one of a vehicle speed limit, a limited geographical driving area, a restriction on audio and/or video in the vehicle, and a limited number of vehicle passenger(s).

8. A method of controlling a vehicle (200) connected to a backend system (100) through a communication network (300), comprising the following steps performed by the vehicle (200):
- receiving (S7) a set of one or more target parameters of vehicle related features, together with a driver identifier (ID_B), from the backend system (100);
- controlling (S10) the vehicle related features based on the received set of one or more target parameters, when said driver (B) drives the vehicle (200);
- determining (S11) vehicle driving information related to the vehicle related features when said driver drives the vehicle (200) and transmitting said vehicle driving information to the backend system (100);
- then, receiving an updated set of one or more target parameters of vehicle related features together with said driver identifier (ID_B), depending on the transmitted vehicle driving information, from the backend system (100);
- controlling the vehicle related features based on the received updated set of one or more target parameters, when said driver (B) drives the vehicle (200).

9. The method according to claim 8, wherein the step (S11) of determining vehicle driving information includes receiving data related to said vehicle related features from at least one in-vehicle device, and generating the vehicle driving information based on the received data.

10. The method according to claim 9, wherein the step of generating the vehicle driving information includes producing a plurality of records of data received from in-vehicle devices at successive time points.

11. The method according to any of claim 8 or 10, wherein the step (S10) of controlling the vehicle related features includes monitoring at least one of said vehicle related feature and, in the event that said driver contravenes or tries to contravene the target parameter of said vehicle related feature, controlling the vehicle to execute at least one action among slowing down the vehicle speed, triggering an alarm in the vehicle, generating report data related to the event and adding the report data within the vehicle driving information.

12. A backend system (100) configured to carry out the steps of the method of claim 1.

13. A vehicle (200) configured to carry out the steps of the method of claim 7.

14. A distributed system comprising a backend system (100) according to claim 10 and a vehicle (200) according to claim 11.

15. The distributed system according to claim 14, further comprising a first user device (DVC_A) having access authorization to the vehicle and configured to transmit to the backend system (100) a request for transmitting to the vehicle (200) said set of one or more target parameters of vehicle related features, together with a second user identifier as driver identifier.
